Europäisches Patentamt

European Patent Office

Office européen des brevets

(19)

(11) Numéro de publication: **0 230 157**
**A1**

(12) **DEMANDE DE BREVET EUROPEEN**

(21) Numéro de dépôt: **86402391.6**

(22) Date de dépôt: **24.10.86**

(51) Int. Cl.⁴: **B67C 7/00** , **B65G 60/00** , **B65G 65/00**

(30) Priorité: **24.10.85 FR 8515812**

(43) Date de publication de la demande:
**29.07.87 Bulletin 87/31**

(84) Etats contractants désignés:
**AT BE CH DE ES FR GB GR IT LI LU NL SE**

(71) Demandeur: **SAINT-GOBAIN EMBALLAGE**
**Les Miroirs 18, Avenue d'Alsace**
**F-92400 Courbevoie(FR)**

(72) Inventeur: **Dhuisme, Claude**
**14-16 allée Saint Cucufa**
**F-92420 Vaucresson(FR)**

(74) Mandataire: **Eudes, Marcel et al**
**Saint-Gobain Recherche 39 Quai Lucien Lefranc**
**F-93304 Aubervilliers Cedex(FR)**

(54) **Conditionnement automatique dans des récipients.**

(57) L'invention a trait au conditionnement par lots entiers, à l'aide d'une machine en ligne, dans des récipients maintenus en place sur un convoyeur horizontal par un support commun.

Elle permet d'opérer à partir de charges palettisées par emploi de plateaux alvéolés intercalés entre cols et fonds de lits successifs, en les démontant puis en les remontant après remplissage par lits entiers.

Le plateau repose de façon continue, au droit de ses empreintes sur un plan de travail horizontal lors du remplissage et du bouchage, tandis que lors de la dépalettisation et de la repalettisation, on le soulève en le saisissant par les zones situées entre lesdites empreintes.

La machine de conditionnement comprend des postes fixes (11, 12) à têtes multiples, un convoyeur horizontal pas à pas (13) à tablier rigide et des palettiseurs (20a, 20b) agissant de place en place, entre les récipients, sur l'ensemble de la surface des plateaux (4).

Fig. 2

EP 0 230 157 A1

## CONDITIONNEMENT AUTOMATIQUE DANS DES RECIPIENTS

L'invention a trait au remplissage et au bouchage automatiques de récipients groupés par plateaux entiers.

Pour effectuer le remplissage et le bouchage de récipients, notamment en verre, on les dépose usuellement sur un convoyeur, en ligne, pour les faire passer un à un, entre des guides, sur les machines de lavage, de remplissage, de capsulage et sertissage et, le cas échéant, d'étiquetage. Pour qu'ils puissent se placer correctement en dépit des tolérances verrières, un ou plusieurs espaceurs sont nécessaires et, si des cadences rapides sont recherchées, ce qui est le cas général, il faut employer des espaceurs à vis. Les multiples contacts créés causent une certaine abrasion latérale des récipients qui nuit à leur solidité, peut endommager d'éventuels décors et provoque, en ligne même, un taux de casse non négligeable. Enfin la longueur de la ligne d'embouteillage exige un personnel de surveillance assez nombreux, un minimum de 5 personnes pour une ligne de 15 000 litres à l'heure par exemple. Des manipulations et une main d'oeuvre supplémentaires sont encore nécessaires aux deux bouts de ligne car les charges doivent être totalement démembrées puis reconstituées. De plus l'opération est très bruyante.

Or il a déjà été envisagé de remplir puis de boucher des récipients par lots de l'ordre de 6 à 24, après les avoir placés dans la caisse qui servira à livrer le produit : le brevet GB-967 803 déplace cette caisse à l'aide de convoyeurs horizontaux vers des ensembles successifs à poste fixe, équipés d'un cadre multiple possédant, à l'entr'axe voulu, un nombre égal de têtes et d'une table mobile verticalement.

De plus il est tout à fait usuel de gerber des charges plus ou moins parallélépipédiques en les faisant reposer les unes sur les autres. Pour opérer mécaniquement, on emploie en particulier des palettiseurs munis de mâchoires capables de saisir latéralement un lit déterminé pour le soulever avec ceux qu'il supporte. La publication de brevet EP-0 143 945, citant pour exemple la mise en place de bouteilles dans des casiers, place de tels appareils sur une machine de chargement de conteneurs : saisissant les piles à leur partie basse, l'un, à l'entrée, permet de dégager les lits inférieurs successifs pour permettre au convoyeur d'acheminer les casiers ; à la sortie, l'autre permet de réintroduire ces derniers sours les lits précédents de façon à reconstituer une pile en sens inverse.

Ce mode de conditionnement ne permet plus de procéder à l'étiquetage après coup mais il ne s'agit pas d'un inconvénient majeur : en ce qui concerne plus particulièrement les bouteilles en verre, une proportion notable est vendue sans étiquette rapportée. Dans les autres cas cette opération peut en principe être effectuée auparavant, alors que les récipients se trouvent encore en file, les étapes ultérieures pouvant se faire en groupe.

Toutefois les récipients, en particulier les récipients en verre, sont de plus en plus stockés et transportés, souvent même commercialisés sur palettes, en plusieurs lits de 100 et plus, les fonds des uns séparés des cols des autres par de simples plateaux consommables en carton ondulé ou, ce qui les rend réutilisables, en matière plastique.

La publication de brevet française FR-A-2 530 226 décrit un plateau intercalaire en matière thermoplastique moulée ou thermoformée, particulièrement adapté grâce au dessin de ses empreintes, capable de fournir des charges stables en maintenant des récipients de formes quelconques en colonnes à espacement donné, ce qui permet d'éviter des contacts mutuels systématiques, susceptibles de détériorer les fûts s'ils ont une surface fragile ou sont transportés à assez longue distance.

Ce mode de chargement trouve utilisation que ce soit pour les récipients pleins et bouchés ou pour des récipients vides et ouverts. Dans ce dernier cas, les plateaux intercalaires séparant les récipients des lits successifs, avec au besoin un couvercle pour le dernier lit, il a pour avantage de les protéger des salissures. La charge peut atteindre jusqu'à 7 à 8 lits soit près de 1000 bouteilles de 1,5 litre, sa constitution ou la reprise de lits successifs peuvant s'effectuer aisément, le cas échéant être totalement automatisées.

Les solutions précitées ne sont pas transposables à ce type de charges, en raison du nécessaire manque de rigidité de leurs plateaux, et un but de l'invention est de fournir le moyen de les traiter de façon analogue, proposant une ligne complète très compacte, économique, de capacité unitaire encore accrue, que l'on puisse commander avec un minimum de personnel, et de réduire ainsi le nombre de manipulations de chque récipient ainsi que ses vitesses de transfert, donc les bruits, les usures et les casses, supprimant en particulier dégroupements et regroupements.

Selon l'invention, une charge sera donc traitée lit par lit, tous les récipients d'un même lit restant en permanence posés et maintenus en place par leur culot dans les empreintes d'un plateau intercalaire pendant l'ensemble de l'opération de conditionnement mais, lors du remplissage ou du bouchage, chaque plateau reposera de façon continue, au droit de ces empreintes, sur un plan de travail horizontal tandis que, lors de la dépalettisation ou de la repalettisation, on soulèvera un par un des plateaux supérieurs successifs en les saisissant sur l'une de leurs faces par les zones situées entre lesdites empreintes.

On parviendra ainsi, malgré le manque de rigidité des plateaux, à éviter à la fois que les récipients ne se renversent sur la chaîne et que les charges ne s'écroulent à l'entrée ou à la sortie.

L'unité de conditionnement selon l'invention comprend alors un convoyeur pas à pas à tablier rigide, et des palettiseurs agissant de place en place, entre les récipients, sur l'ensemble de la surface des plateaux intercalaires : de préférence, le convoyeur comprend une voie par file d'empreintes des plateaux et les transporteurs, mobiles longitudinalement sous son bâti porteur, sont des palettiseurs à fourche aptes à pénétrer entre ses voies.

Il est aussi possible d'utiliser des palettiseurs sous vide dans la cloche desquels une légère dépression s'effectue au-dessus de chaque lit, qui est ainsi décollé jusqu'à des butées puis soulevé avec son plateau. A condition de prévoir sur le convoyeur des postes de pose et de dépose accessible par le haut, ceci évite toute sujétion quant à l'espacement des bouteilles pour le passage des dents de la fourche.

Avantageusement, cette unité comprendra en outre un convoyeur amont amenant les charges palettisées de récipients vides et ouverts, un convoyeur aval évacuant les charges palettisées de récipients pleins et bouchés, et un convoyeur de transfert des palettes vides du poste de dépalettisation au poste de repalettisation.

Si les palettes de récipients pleins et bouchés sont destinées à être directement commercialisées, on utilisera en principe des récipients à étiquettes prémanchonnées, placées avant la mise en plateaux. Le mode de conditionnement selon l'invention est aussi pleinement adapté à l'emploi de récipients préalablement décorés, leur maintien à espacement constant évitant que les décors ne soient altérés par abrasion.

Etant donné que le remplissage s'effectue immédiatement après la dépalettisation, l'ouverture des récipients est à l'air libre pendant un minimum de temps ce qui est très avantageux quant à la qualité sanitaire des produits et dispense en pratique de tout lavage des récipients neufs venus d'usine.

Tous types de bouchage peuvent être utilisés : l'emploi de capsules vissées ou serties conduira à achever l'opération à poste fixe, à l'arrêt, comme le remplissage ; mais, pour la pose par simple pressage, on travaillera en principe au vol, comme pour prélever la capsul à mettre en place, alors que les plateaux de récipients défilent sur le convoyeur de plateaux.

Dans la majeure partie des cas, la dimension des têtes peut être rendue inférieure à la maille des plateaux intercalaires sinon aux dimensions des récipients, ce qui permettra de les placer en nombre égal à celui des empreintes, au même intervalle et de les abaisser toutes simultanément. S'il en est autrement, par exemple avec un agencement assez compact de récipients d'assez faible diamètre, un emplacement sur deux, voire sur quatre seulement sera occupé et les récipients seront remplis en plusieurs temps en des positions distinctes couvrant le cas échéant deux plateaux à la fois.

D'autres caractéristiques et avantages de l'invention apparaîtront dans la description ci-dessous d'un exemple avantageux, qui se réfère aux dessins annexés dans lesquels :

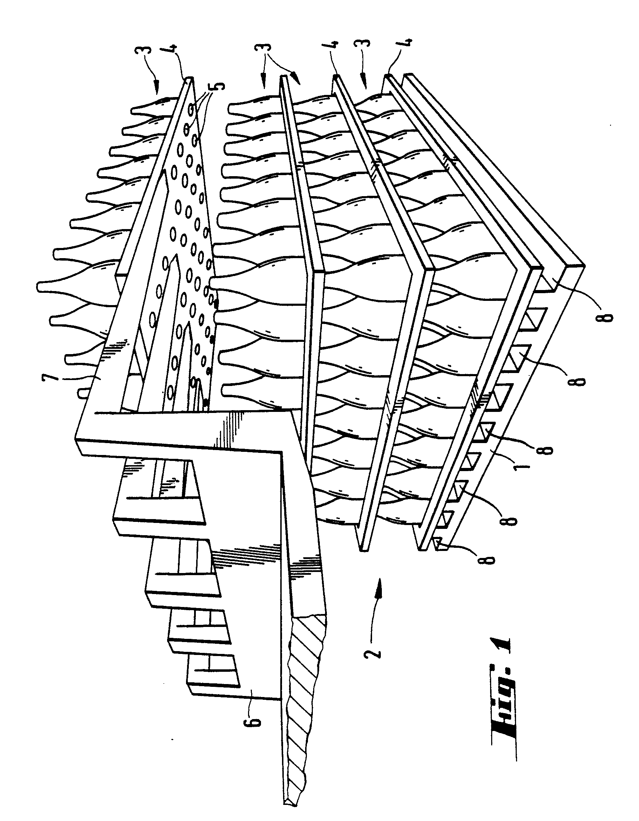

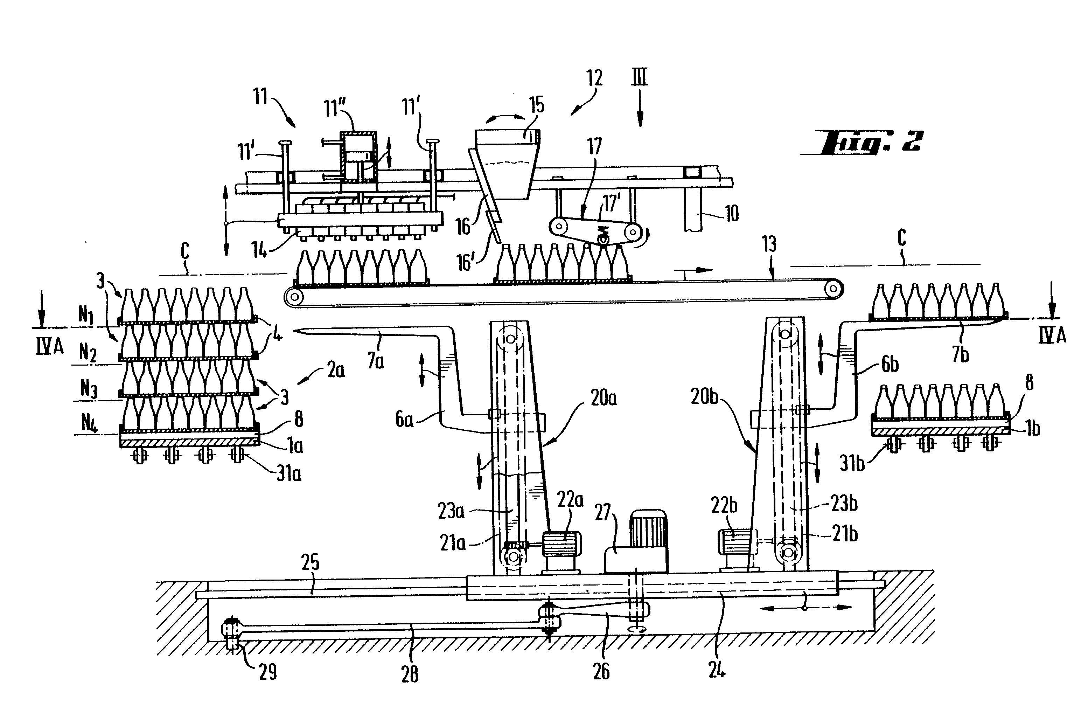

. la figure 1 représente, en perspective, une charge de récipients en verre empilés en cours de palettisation ou dépalettisation,

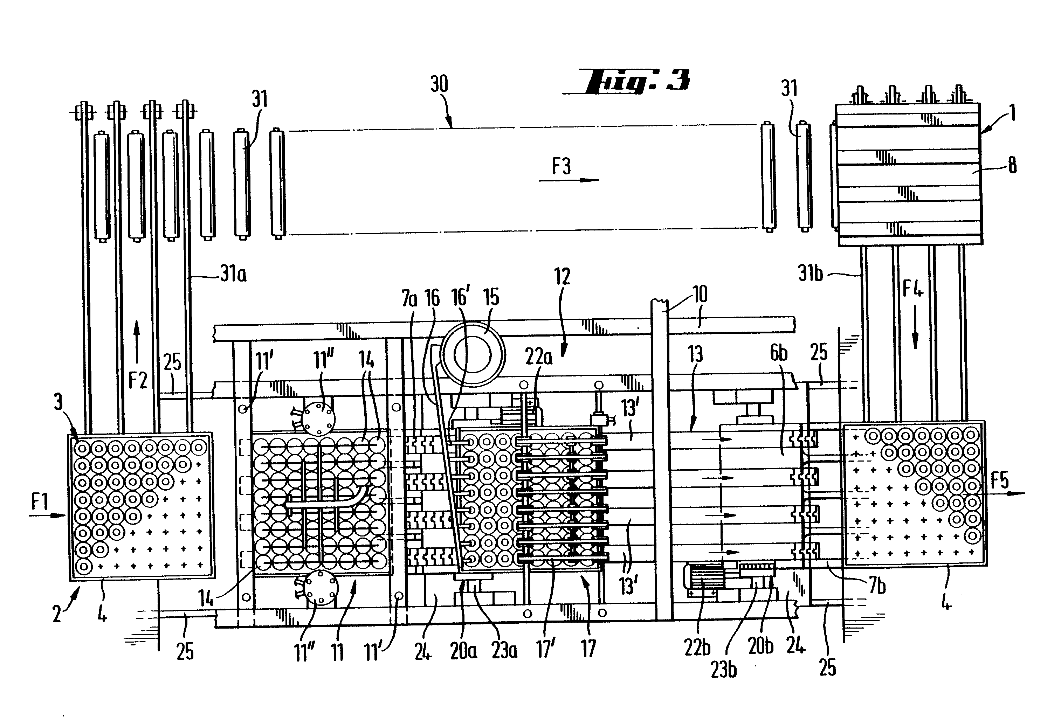

. la figure 2 est une vue schématique de profil d'une unité d'embouteillage selon l'invention,

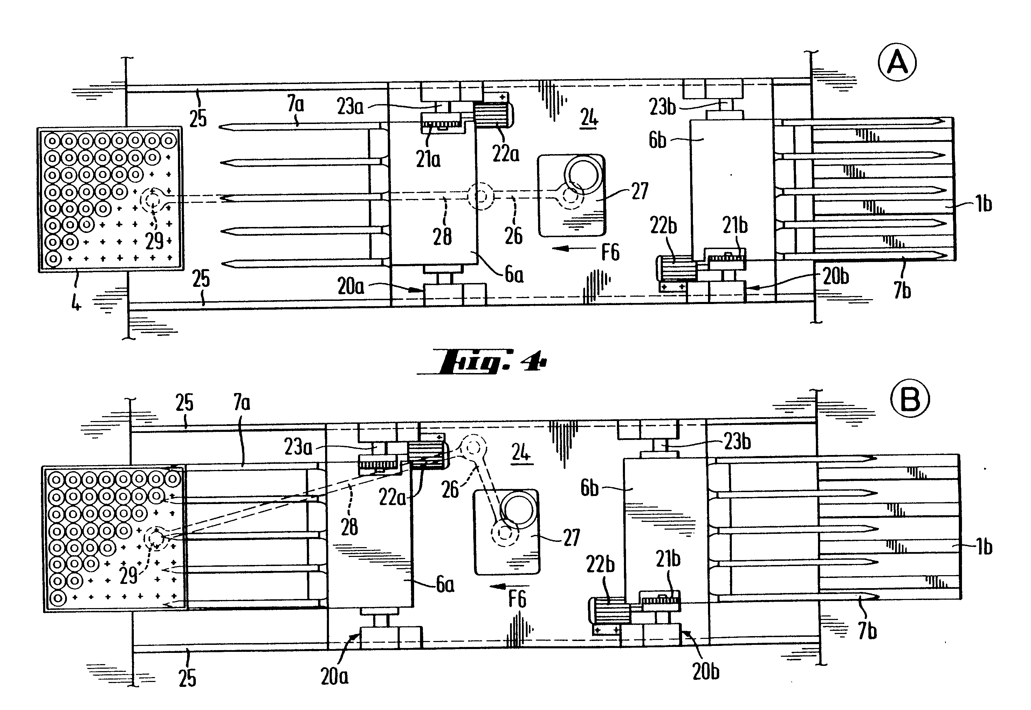

. la figure 3 est une vue de dessus de l'unité représentée par la figure 2,

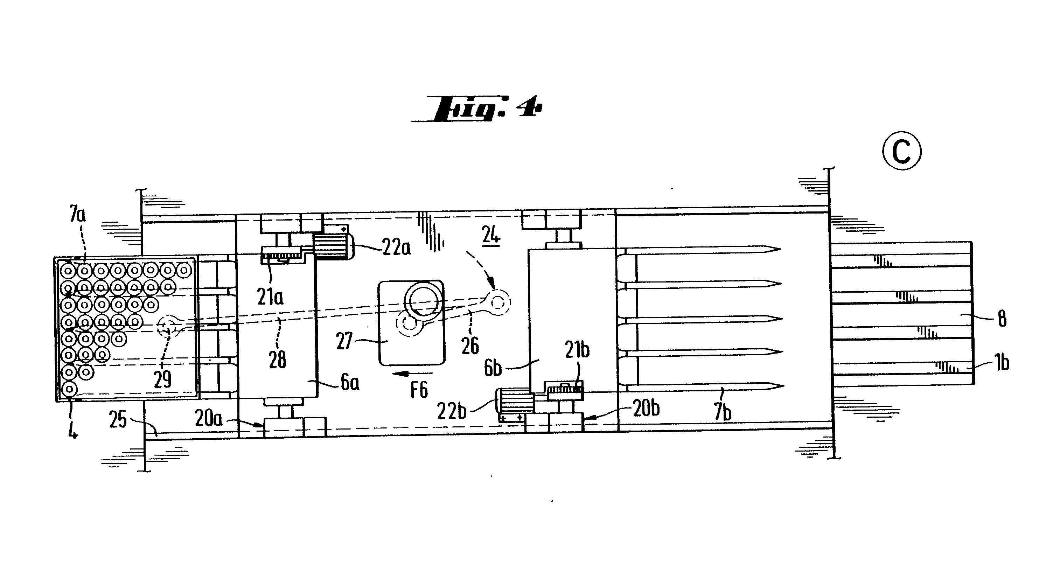

. la figure 4 montre, selon la ligne IV-IV de la figure 2 et à l'aide de vues repérées de A à C, le principe d'entraînement des palettiseurs par un système de bielle-manivelle,

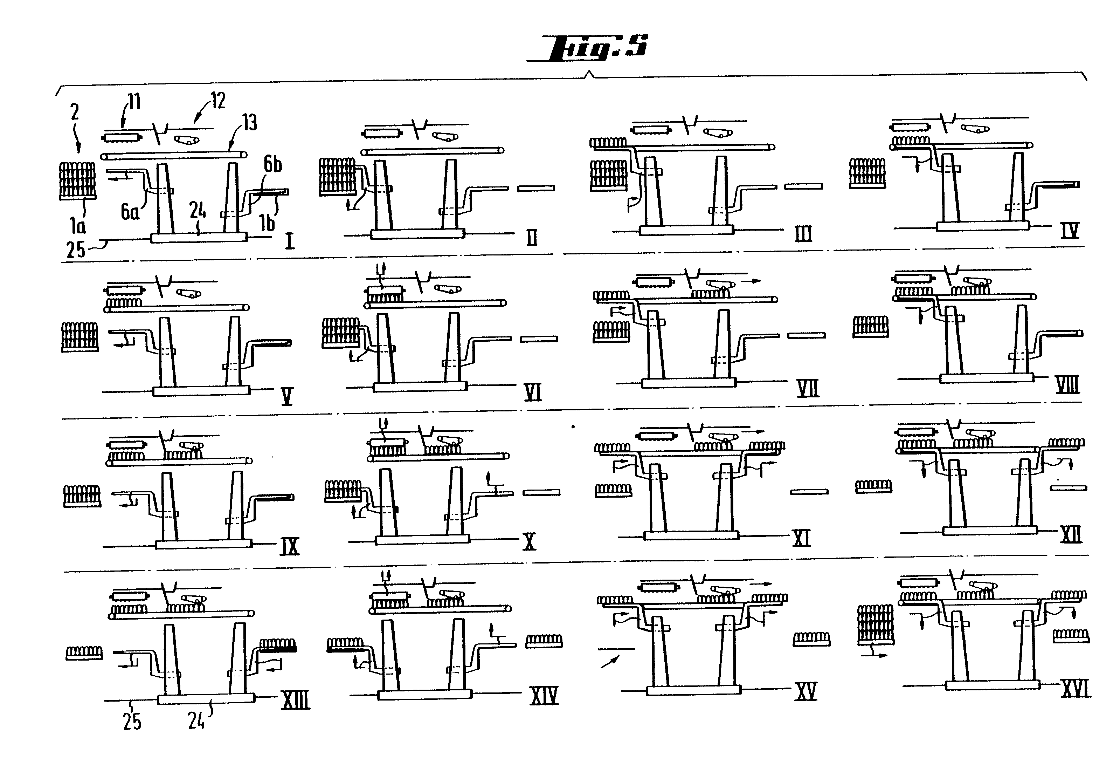

. la figure 5 illustre, par des schémas numérotés de I à XVI, les différentes positions respectives des machines de l'unité d'embouteillage en cours de fonctionnement.

La figure 1 représente schématiquement une palette 1, qui supporte une charge 2 formée de lits superposés 3 de récipients, ici 8 $^\times$ 8 bouteilles de verre. Chaque lit 3 repose sur un plateau intercalaire 4 en matière plastique thermoformée, porteur d'empreintes 5 de nature à maintenir les récipients légèrement écartés. Une fois retirée la housse protectrice généralement constituée de matière plastique rétractable, on peut désempiler tour à tour les lits 3 en introduisant sous le plateau le plus élevé une fourche 6 dont les dents 7 passent entre les cols des bouteilles de l'étage suivant. Même lorsque les bouteilles ne sont pas disposées, comme représenté ici, suivant une maille rectangulaire ou carrée mais en quinconce, l'espace intercalaire disponible à ce niveau des bouteilles suffit généralement pour permettre à ces dents de pénétrer; les plateaux peuvent alors êtra soulevés un par un. La palette 1 est munie d'encoches 8, une par dent de la fourche 6, ou d'une plaque de forme appropriée, qui permettent de dépalettiser le dernier lit. Sans qu'il s'agisse d'une obligation, le même type de matériel sera de préférence employé pour la repalettisation.

D'autre part, la nouvelle charge ne devant guère dépasser une tonne, soit quatre lits, les palettes de départ seront avantageusement semblables ; elles pourraient toutefois comprendre huit lits sous réserve de ne pas dépasser le gabarit admissible, mais en prévoyant un complément de palettes vidés.

Les plateaux en matière plastique thermoformée préconisés plus haut donnent à chque lit de récipients une stabilité suffisant non seulement au transport mais aussi pour lui permettre, même lorsque les récipients sont vides, de résister aux faibles efforts de renversement subis car le procédé de l'invention, permettant de traiter ensemble un nombre élevé de files de récipients n'exige, même à cadence élevée, que de faibles vitesses donc de faibles accélérations.

L'unité d'embouteillage que représente la figure 2 comprend au niveau supérieur, montés sur un bâti fixe 1O, un ensemble de remplissage 11 et un ensemble de bouchage 12, puis un convoyeur 13 qui présente les plateaux sous ces ensembles successifs.

L'ensemble de remplissage 11 est relié à une cuve de stockage du liquide située à un étage supérieur et non représentée ici. Il est constitué d'un cadre porteur d'autant de têtes de remplissage indépendantes 14 que chaque lit comporte de bouteilles, jusqu'à treize rangées sur dix files par exemple. Il est monté mobile verticalement sur des glissières 11' afin de pouvoir, au moment du remplissage, abaisser les têtes par des vérins 11" sur les récipients immobiles. Dans l'exemple représenté l'encombrement de chaque tête est inférieur à la maille des plateaux ; s'il n'en était pas ainsi, leur espacement devrait être augmenté et le remplissage de chaque plateau s'effectuerait en plusieurs phases, par des avances successives du convoyeur au pas convenable.

Après le remplissage, les plateaux entraînés par le convoyeur 13 circulent sous l'ensemble de bouchage, comprenant d'abord un distributeur vibrant 15, alimentant par une rampe 16 une goulotte distributrice de capsules 16' pour chaque file de bouteilles, puis un applicateur 17 formé d'une courroie presseuse à plusieurs pistes 17', une par file, entraînées en synchronisme avec le convoyeur 13 de façon à accompagner son mouvement.

Au niveau inférieur se placent les palettes 1a et 1b supportant respectivement les charges de bouteilles vides et de bouteilles pleines. Est représentée une charge 2a complète, de quatre lits de bouteilles empilées, la palette 1b ne portant encore qu'un seul plateau.

Entre leurs emplacements sont installés deux palettiseurs 2Oa, 2Ob : avec leur plateau 4, les lits 3 seront soulevés et disposés un à un sur le convoyeur par la fourche de dépalettisation 6a puis repris et réempilés par la fourche de repalettisation 6b. Ces fourches sont mues verticalement, grâce aux chaînes d'entraînement 21a et 21b, commandées en mouvement alternatif par les moteurs 22aet 22b, le long des glissières 23a et 23b d'un chariot porte-fourche qui se déplace horizontalement.

Dans l'exemple représenté, il s'agit d'un seul et même chariot 24 monté sur des rails 25 et commandé par un simple système de bielle-manivelle ; de plus, c'est ce chariot qui reçoit la manivelle 26, dont l'arbre est entraîné par un moto-réducteur 27 alors que la bielle 28 se trouve ancrée à un point fixe 29. Les palettiseurs 2Oa, 2Ob présentent donc toujours le même écartement longitudinal, alors que les mouvements verticaux de leurs fourches respectives sont indépendants. Sans sortir du cadre de l'invention, on pourrait monter chacune sur un chariot porte-fourche indépendant.

La figure 3 est une vue de dessus de l'installation représentée à la figure 2. Sur le côté de l'unité d'embouteillage proprement dite est figuré un transporteur 3O constitué d'un convoyeur à rouleaux 31 parallèle au convoyeur principal 13, croisé perpendiculairement par deux convoyeurs à bande 31a et 31b. Le transporteur 3O est destiné à conduire les palettes 1, une fois leur charge dépalettisée, jusqu'au poste de repalettisation, pour y recevoir une nouvelle charge, formée alors de récipients pleins et bouchés. Les directions d'avancement des convoyeurs 31a, 31 et 31b sont données par les flèches F2, F3 et F4. Deux convoyeurs supplémentaires indiqués simplement par les flèches F1 et F5 peuvent en outre être utilisés pour acheminer les charges de bouteilles vides jusqu'au poste de dépalettisation et pour évacuer les charges de bouteilles pleines du poste de repalettisation. Il est, bien sûr, encore possible d'utiliser pour ces deux dernières opérations des chariots de manutention.

Pour permettre le transfert des lits successifs, le convoyeur à plateaux 13, qui défile sous l'ensemble de remplissage 11 et l'ensemble de bouchage 12, est constitué en fait de quatre voies parallèles 13', suffisamment écartées pour permettre le passage d'une dent de chaque fourche de palettisation ou de dépalettisation. Chaque voie est formée de préférence par une chaine sans fin de plaques métalliques articulées, dont le brin supérieur est guidé par une glissière : on obtient ainsi une parfaite stabilité. Les plaques peuvent au besoin être munies d'organes de centrage coopérant avec des empreintes des plateaux pour éviter tout risque de glissement ou de mauvaise mise en position des plateaux sous l'ensemble de remplissage.

Les vues A à C de la figure 4 montrent l'entraînement du chariot porte-fourche 24. Elles montrent la fourche de dépalettisation 6$\underline{a}$ s'engageant entre les bouteilles de la charge 2$\underline{a}$ tandis que la fourche 6$\underline{b}$ se dégage de la palette 1$\underline{b}$, une partie enlevée du chariot laissant voir le système de bielle-manivelle.

La vue A correspond à la position extrême droite représentée à la figure 2, c'est-à-dire que la fourche de dépalettisation est alors au point mort sous l'ensemble de remplissage 11 et que la fourche de repalettisation, qui en est solidaire pour ses déplacements longitudinaux, se trouve au dessus de la pallette 1$\underline{a}$ ; il ne s'agit là que des positions longitudinales car, comme indiqué précédemment, les deux fourches effectuent des déplacements verticaux indépendants.

Sur la vue B, la manivelle 26 a effectué près d'un quart de tour, de sorte que la force de rappel exercée par la bielle 28, mobile autour du point fixe 29 a déplacé le chariot porte-fourche vers la gauche, engageant donc la fourche 6 $\underline{a}$ suivant la direction de la flèche F6.

La vue C correspond à l'approche de la position extrême gauche du chariot 24 : à ce moment la manivelle 26 est presque alignée sur la bielle 28 et la fourche 6 $\underline{a}$ est en position de dépalettisation.

Enfin lorsque la manivelle 26 effectuera un nouveau demi-tour, le chariot porte-fourche se déplacera vers la droite, en sens inverse, pour revenir à son point de départ.

La figure 5 montre les premières principales étapes du cycle de fonctionnement de l'unité d'embouteillage, en quatre phases représentées sur les schémas numérotés en chiffres romains de I à XVI.

Initialement (étape I) on a placé au poste de dépalettisation et déhoussé une charge complète soit quatre lits superposés de bouteilles vides et ouvertes posées sur des plateaux intercalaires en matière thermoplastique, le plateau inférieur étant au niveau $N_1$, les plateaux supérieurs successifs respectivement aux niveaux $N_2$, $N_3$ et $N_4$, sous le convoyeur (voir figure 2). La fourche de dépalettisation 6$\underline{a}$ vient au niveau $N_4$, ses dents à la hauteur des cols du troisième lit, dans la position longitudinale de la vue A ; la fourche de repalettisation 6$\underline{b}$ est donc au dessus de la palette 1$\underline{b}$, placée en attente d'une nouvelle charge. Les machines de remplissage et de bouchage sont bien entendu au repos.

Lors de la mise en marche, le chariot 24 se déplace vers la gauche de sorte que les dents de la fourche 6$\underline{a}$ viennent se loger sous le premier plateau intercalaire, porteur d'un lot de bouteilles vides et ouvertes, entre les cols des bouteilles du lit immédiatement inférieur (étape II). Le moteur 22$\underline{a}$ est alors mis en route et la fourche 6$\underline{a}$ déplace verticalement l'ensemble du plateau jusqu'à ce que ses dents soient au niveau C, légèrement au-dessus du convoyeur 13 (étape III). Le chariot revient ensuit vers la droite, les dents de la fourche passant entre les voies 13' afin de placer le plateau chargé sous l'ensemble de remplissage 11 (étape IV) puis, déposant au passage ce plateau sur le convoyeur arrêté en position fixe, cette fourche descend jusqu'au niveau $N_3$ du deuxième lot de la charge, devenu lot supérieur, pour entreprendre une deuxième phase rectangulaire de déplacement (étape V).

Pendant ce temps, l'ensemble de remplissage s'abaisse, les têtes viennent alors au contact des goulots des bouteilles placées en regard et les remplissent à la fois puis se dégagent (étape VI) ; au besoin l'opération pourrait, comme cela a été indiqué, s'effectuer en deux, trois, voire quatre stades, le convoyeur avançant chaque fois d'un pas. Simultanément la fourche de dépalettisation est à nouveau venue vers la gauche, pour prendre en charge le deuxième plateau.

Au cours de l'étape suivante (étape VII), la mise en route du convoyeur engage le premier lot de bouteilles pleines sous l'ensemble de bouchage, où chacune prélève au passage une capsule sur la goulotte 16' du distributeur 15 correspondant à la file où elle se trouve. tandis que la courroie d'application 17' agit progressivement sur une première partie d'entre elles ; la seconde partie ne sera fixée qu'ultérieurement. Simultanément, le dépalettiseur soulève le deuxième plateau jusqu'au niveau C, à la hauteur du convoyeur.

Le convoyeur 13 à nouveau immobile, le deuxième lot de bouteilles vides se met en place - (étape VIII), puis la fource 6$\underline{a}$ descend jusqu'au niveau $N_3$ du troisième plateau (étape IX) et une troisième phase commence.

Tandis que le deuxième lot de bouteilles se remplit, la fourche 6$\underline{a}$ prend en charge du suivant - (ètape X). Celle du repalettiseur 20$\underline{b}$, dont les mouvements longitudinaux suivent les siens, est alors à gauche, sous le convoyeur, et se met en marche.

Le convoyeur démarrant à nouveau (étape XI), le bouchage du premier lot de bouteilles s'achève tandis que le deuxième, constitué de bouteilles pleines mais ouvertes, s'engage à son tour sous l'ensemble de bouchage où il reçoit ses capsules puis que la courroie 17' en fixe une premiére partie. Le premier lot parvient alors au dessus du repalettiseur 20$\underline{b}$ dont la fourche le soulève jusqu'au niveau C où le dépalettiseur 20$\underline{a}$ porte aussi le troisième, constitué de bouteilles encore vides et ouvertes.

Dans l'étape suivante (étape XII), le chariot s'étant déplacé vers la droite, le premier lot de bouteilles quitte le convoyeur pour venir au dessus de la palette 1b en attente, tandis que le troisième lot se met en place. Les deux fourches sont alors abaissées au niveau N4 et le premier lot de bouteilles, pleines et bouchées, est posé sur la palette 1b (étape XIII).

Une quatrième phase peut donc commencer : le troisième lot de bouteilles est alors rempli tandis que la fourche 6a se place sous le dernier lit (étape XIV), puis le porte au niveau du convoyeur 13, libérant ainsi la première palette 1a ; celle-ci peut être évacuée par le transporteur 30 vers une position d'attente, alors que le convoyeur se met en marche pour de nouvelles opérations de bouchage (étape XV).

Les palettiseurs 20a et 20b continuent leur mouvement alors qu'une nouvelle charge de bouteilles vides et ouvertes est amenée au poste de dépalettisation pour réalimenter la machine (étape XVI).

Dès qu'elle sera entièrement constituée, la première charge de bouteilles pleines sera évacuée vers les postes d'expédition et la palette 1a resservira, au poste de sortie, à constituer la suivante.

Il est à noter que, selon ce procédé, peu de temps s'écoule entre le déhoussage des charges ou le dégagement d'un plateau et le remplissage, ce qui garantit de très bonnes conditions d'hygiène, d'autant que ces deux opérations s'effectuent sur un espace très restreint dont il est donc aisé de surveiller la parfaite propreté, l'ensemble de la machine, très compacte et conduite par un seul employé, pouvant être placé en zone " blanche ".

## Revendications

1. Procédé de conditionnement à postes fixes, par lots entiers, à l'aide d'une machine en ligne, dans des récipients maintenus en place sur un convoyeur horizontal par un support commun sur lequel ils restent posés en permanence pendant l'ensemble de l'opération, caractérisé en ce que, ce support étant un plateau alvéolé semi-rigide dans les empreintes duquel les récipients d'un même lot sont maintenus en place par leur culot, et apte à servir d'intercalaire entre cols et fonds de lits successifs pour constituer une charge palettisée, le plateau reposant de façon continue, au droit de ses empreintes, sur un plan de travail horizontal lors du remplissage et du bouchage, tandis que lors de la dépalettisation et de la repalettisation, on soulève un par un des plateaux supérieurs successifs en les saisissant sur l'une de leurs faces par les zones situées entre lesdites empreintes, pour démonter puis reconstituer en sens inverse une charge palettisée.

2. Dispositif de conditionnement par lots entiers, comprenant une machine en ligne à postes fixes et à convoyeur horizontal servie par des palettiseurs, caractérisé en ce que le convoyeur (13) est un convoyeur pas à pas à tablier rigide et que les palettiseurs (20a, 20b) agissent de place en place, entre les récipients, sur l'ensemble de la surface des plateaux.

3. Dispositif de conditionnement selon la revendication 2, caractérisé en ce que l'un au moins des palettiseurs est un palettiseur à cloche en dépression équipée de butées.

4. Dispositif de conditionnement selon la revendication 2, caractérisé en ce que l'un au moins des palettiseurs comporte une fourche (5a, 5b) à cycle de déplacement rectangulaire, associée à un convoyeur à voies multiples (13'), et dont les dents (6), parallèles à la direction de ce convoyeur, passent entre ses voies comme entre les cols des récipients.

5. Dispositif de conditionnement selon la revendication, 4, caractérisé en ce qu'il comprend deux palettiseurs à fourche montés sur un même chariot (24) à déplacement longitudinal.

6. Dispositif de conditionnement selon la revendication 5, caractérisé en ce que le chariot est mû par un mécanisme à bielle (26) et manivelle (28) dont la bielle est articulée sur le point fixe (29).

7. Dispositif de conditionnement selon la revendication 2 à 6, caractérisé en ce qu'il comprend un convoyeur (30) pour le transfert de palettes vides du poste de dépalettisation au poste de repalettisation.

**Fig. 1**

0 230 157

*Fig. 2*

0 230 157

**Fig. 3**

Ⓐ

Ⓑ

**Fig. 4.**

1b, 7b, 20b, 21b, 22b, 23b, 6b, 24, 27, F6, 22a, 21a, 23a, 28, 6a, 20a, 7a, 25, 26, 29

Fig. 4

0 230 157

_Fig. 5_

0 230 157

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | GB-A- 967 803 (IN-CRATE BOTTLING CO.)<br><br>--- | | B 67 C 7/00<br>B 65 G 60/00<br>B 65 G 65/00 |
| A | BE-A- 646 022 (S.T.N.E.)<br><br>--- | | |
| A | EP-A-0 143 945 (KANNENBERG)<br><br>--- | | |
| A | EP-A-0 099 827 (SAINT GOBAIN)<br><br>----- | | |

| DOMAINES TECHNIQUES RECHERCHES (Int. Cl.4) |
|---|
| B 67 C<br>B 67 B<br>B 65 G |

Le présent rapport de recherche a été établi pour toutes les revendications

| Lieu de la recherche | Date d'achèvement de la recherche | Examinateur |
|---|---|---|
| LA HAYE | 29-01-1987 | VROMMAN L.E.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82